# EUROPEAN PATENT APPLICATION

(11) **EP 1 903 465 A1**
(43) Date of publication of application: **26.03.2008**
(21) Application number: 06291476.7
(22) Date of filing: 20.09.2006
(51) Int. Cl.: G06F 21/00, H04L 12/58, H04L 29/06, G06Q 10/00, H04L 29/08

(54) **A SIP communication with a secure personal token for interacting with personal data**

(71) Applicant: Axalto S.A., 92190 Meudon (FR)
(72) Inventor: Ganem, Hervé, 92190 Meudon (FR)
(74) Representative: Jacquot, Ludovic R. G.

(57) **Abstract**

The invention relates to a communicating method between a terminal assembly comprising a terminal and a secure personal token (10, 30, 50) hosted by the terminal in a communication network and a remote entity (11,31,51) in the communication network via a SIP connection, characterized in that it comprises the step which consists in interacting with personal data stored in the terminal assembly, which are associated specifically to the end-user and which are subject to being changed during the life duration of the personal token.

## Description

The invention relates to personal tokens used for authenticating a user when such user accesses to a limited or a private resources equipment such as a mobile telecommunication network, a remote server storing secret data or even a protected area with limited physical access thereto.

The mostly known device of this type is the IC card such as for example a SIM card (Subscriber Identification Module) or a credit card, but it can also be a USB key, a mass memory card, or any kind of token carrying some necessary credentials.

Such tokens are typically compliant with international standard ISO7816.

The use of a Sip user agent on a secure token enables to support incoming IP connection to the token.

It opens the way to a new generation of collaborative applications involving the communication between secure tokens with different form factors and possibly connected on different networks.

In such respect it is a main purpose of the invention to provide an effective and easy to use way of taking benefit from a SIP enabled personal token such as an IC card.

This purpose is achieved by way of the invention as recited in the appended claims.

Other purposes, benefits and aspects of the invention will appear through the following description, which is made in reference to the appended figures, among which figures 1 to 6 disclose several embodiments of the present invention.

Figure 2 depicts functional blocks of a data synchronization application according to the invention.

Figure 3 depicts a peer to peer data synchronization process flow.

Figure 4 depicts a dynamic phone book architecture according to the invention. Figure 5 depicts a flow of operations for a typical GSM/VOIP call.

The list of possible embodiments is quite large this memo will focus on the description of two preferred embodiments.

A first described embodiment related to synchronization of a memorized contacts list between a SIM card and a USB secure key connected to a user PC or to an adsl set top box.

A second embodiment relates to a dynamic phone book allowing to manage entries for nomadic VOIP users.

In both cases, the method comprises the preliminary step which consists in registering the personal token by a SIP server in the network, and performing a SIP connection with a specific remote SIP entity when such specific remote SIP entity registers by the SIP server.

The specific SIP entity is either a secure token to be synchronized with, either a remote SIP enabled entity as registered in a Voice-over-IP list of the user of the personal token.

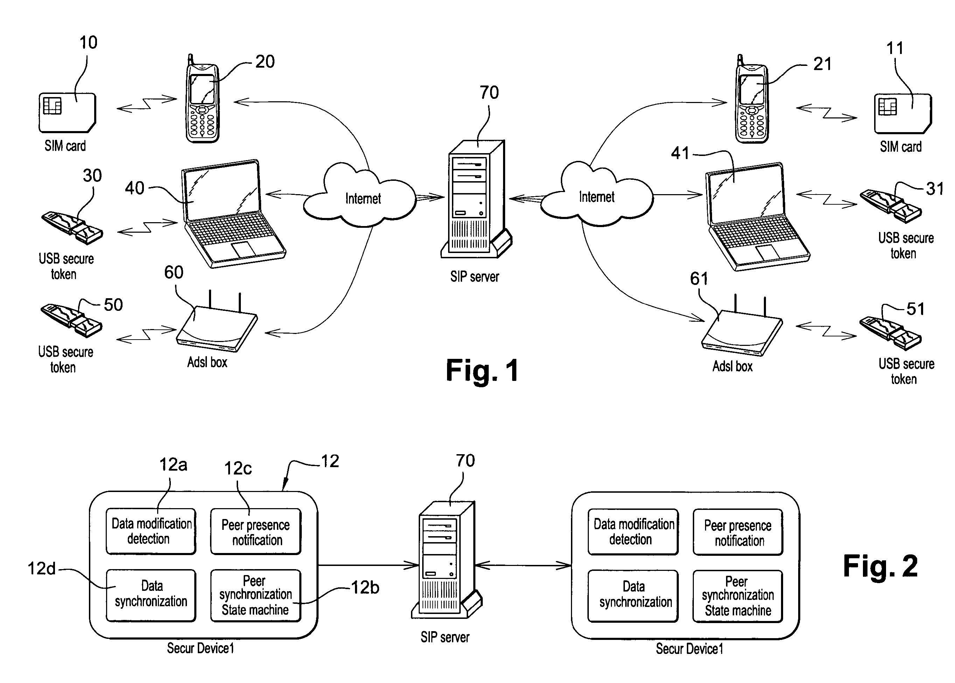

Figure 1 represents an overall architecture relating both to the first embodiment and to the second embodiment.

The general Architecture representation highlights the use of two secure personal tokens with two different form factors : A SIM card 10, 11 in a mobile phone handset 20, 21 and a secure USB key 30, 31, 50, 51 attached to a PC 40, 41 or to an ADSL box 50, 51.

A SIP user agent is embedded in the secure personal tokens. When the device is powered on, the SIP user agent registers with a SIP server 70 and authenticates using a predefined user name and password.

No IP adress is necessary for the secure device, which is one of the main advantages of the present SIP connection with secure personal tokens.

Once the registration completed, the secure personal tokens can connect and interoperate with each others or with servers on the Internet using the SIP protocol, all communications being channeled via the Sip server 70.

In order for the devices to connect with the Sip server 70, the secure personal tokens 10, 11, 30, 31, 50, 51 need to be able to create and send IP data packets. The method used to gain access to the IP network is device dependant and will be described for the two form factors considered :

If the handset 20 hosting the SIM card 10 supports the BIP proactive commands, the SIM card 10 will execute the BIP proactive command "OPEN CHANNEL", selecting the UDP protocol and will then be subsequently able to send UDP packets to the remote SIP server 70. The payload of the UDP packets will contain the SIP register command to be processed by the Sip server 70.

The response to the register command will be sent back to the SIM card 10 as a response to the incoming UDP packets. The server 70 will send keepalive UDP packets at periodic intervals in order to maintain the capability to send new data packets from the server to the SIM card 10. This capability is depending on the configuration of firewalls likely to be present between the SIM card 10 and the server 70.

All communications between another secure personal token and the SIM card 10 will be relayed by the Sip server 70.

The secure USB key 31 is inserted into a host computer 41 (PC or ADSL appliance) using a USB interface . Two methods may be envisaged for the USB key 31, which includes SIM functionalities, i.e. proctection of some secure data, secret keys, and protection of the processing against any fraudulent analysis, for this USB key to send and receive data from the Internet.

In a first alternative, the USB key 31 appears to the host computer 41 as a network card device, providing a communication channel for the applications embedded in the USB key. The USB key 31 can then be seen from the outside world as an IP node with its own IP address. This makes possible the transmission and reception of IP packets to/from native TCP/UDP/IP applications running in the USB key. In this case, the IP address of the USB key can be allocated via different means. It can be a statically allocated address. It can also be a dynamically allocated private IP address obtained from the host computer 41. In this case the communication between the USB key 31 and the IP network will use network address translation technique. It can be also a dynamically allocated address obtained from a dhcp server located in the local area network (bridge mode).

In an other alternative, the USB key 31 appears to the host computer 41 as a device different from a network device such as for example a mass storage device. In such case, the USB token comprises preferable both a mass storage unit, with memory and associated processor, an a security unit, comprising secure memory and secure processing unit. The secure memory and secure processing unit are preferably consituted by the chip of a SIM card. The USK key preferably communicates with the host via the mass storage unit, so that the USB key appears to the host as a simple mass storage USB unit and implements a mass storage communication protocol with the host.

In this case all IP communication between the USB key 31 and a remote computer on the IP network will be performed via a proxy server executed on the host computer. The proxy server will communicate with the secure personal token using a proprietary protocol (for example here the mass storage protocol) and will encapsulate the transmitted data packets into IP packets for communication with the remote server. In this case, the communication between the secure device and the remote server is not fully IP based. Only the communication path between the host and the server is IP based.

In the first embodiment and as represented on figure 2, the SIM card 10 hosts a synchronization application 12. The purpose of the data synchronization application is to synchronize automatically the data stored on two secure personal tokens in a peer to peer mode.

This application will be explained in the case of a SIM card hosted application. Such application is preferably the same when it is hosted by the USB key 31.

A data modification detection module 12a is triggered by the insertion, edition or deletion of a particular type of data stored on the present personal token, i.e. SIM card 10 and initiates an action such as a synchronization operation upon a notification of such an event.

A peer synchronization state machine 12b maintains the list of peers for which a synchronization operation should be performed and the state of the corresponding synchronization operation(s).

A peer availability notification module 12c requests and receives notifications about peers online presence. Once a peer is online, pending synchronization operations with this peer may be initiated. The notification requests are transmitted to the previously described SIP server 70 using "SUBSCRIBE" SIP messages and the notification events are transmitted from the SIP server 70 to the SIM card 10 using "NOTIFY" sip Messages.distinct SUBSCRIBE messages are sent by the user agent for each of the contacts in the VOIP client contact list when this list is maintained on the client side.

A data synchronization module 12d is in charge of performing a data synchronization operation. It is based on the use of a synchronization protocol such as SyncML.

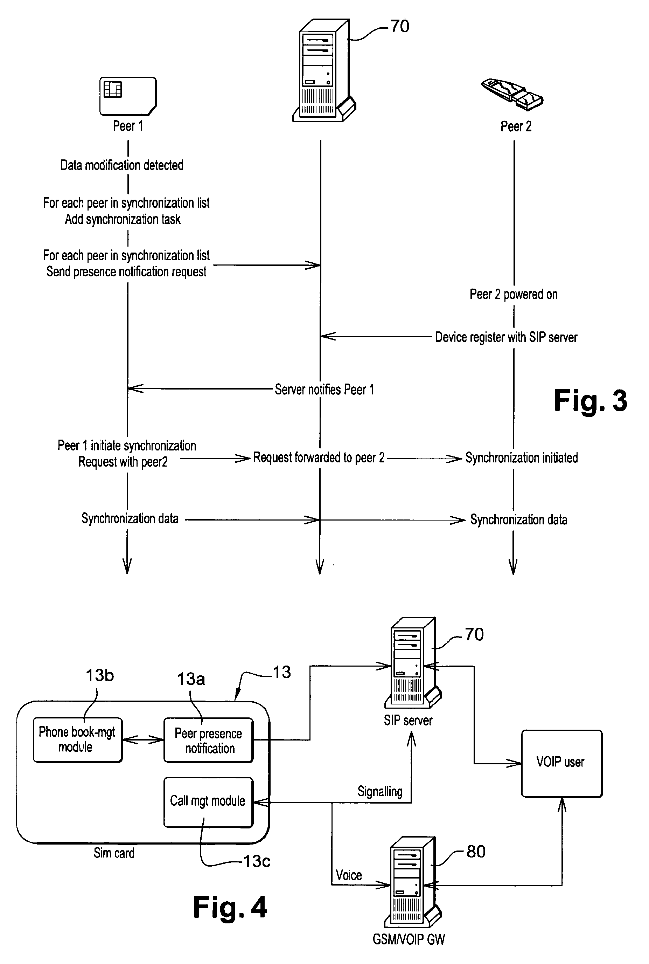

The flow of operations involved in a typical data synchronization session between two secure personal tokens here named generically peer1 and peer 2 is summarized on Figure 3.

Each secure personal token maintains a list of peers it should be synchronized with regarding a particular type of data. Whenever a data change is detected, peer1 sends a presence notification request to the Sip server 70 for any device peer2 present in this list

Upon reception of a presence notification for peer2, peer1 initiates a peer to peer synchronization operation. All the Synchronization operations are relayed from peer1 to peer 2 via the Sip server 70 using SIP messages of type "MESSAGE". Those messages carry the semantic of the synchronization operations. When SyncML protocol is used, they typically carry sync ml messages encapsulated in SIP messages.

A first example of synchronization is a peer to peer contacts synchronization between SIM card 10 and a USB PC key 31.

This example will illustrate the synchronization between the user phonebook stored in the SIM card 10 of the handset 20 and the contacts of an email client application stored on the a usb key 31 to be connected to the PC 41.

A second example is a peer-to-peer credential synchronization between an USB key 30 in the PC 40 and the USB key 51 in the adsl set top box 61.

In those example, the data to be synchronized are personal data. These data are associated specifically to the end-user and are subject to being changed or updated during the life duration of the personal token. Those data are typically secret and must therefore not be disclosed on the network.

The second preferred embodiment will be described here-after.

In this embodiment, a dynamic phonebook is to be coupled by means of voice over IP telephony communication.

The purpose in this embodiment is to manage dynamically the phone book of a terminal assembly comprising SIM card and handset, and more preferably the phonebook as stored in the SIM card, in such a way as to insert and remove dynamic entries associated to VOIP users depending on the online presence of those users.

A scenario corresponding to this embodiment is as follows:

Paul's SIM card has two contact lists, i.e. a usual phonebook in the memory of the SIM card, and a list of Voice-over-IP contacts.

Paul has registered Joe, A VOIP user in its VOIP contact list stored on his SIM card 10. When Joe starts his VOIP client (on his PC), a popup appears on the screen of Paul's handset indicating : "Joe is online". At the same time a new phone entry has appeared for Joe in Paul's SIM phonebook. By selecting this entry, Paul can call Joe on his soft phone for the price of a local call wherever Joe's location.

The architecture of the solution is described on Figure 4.

An application 13 is hosted by the SIM card 10, which relies on three modules.

A peer presence notification module 13a is in charge of requesting and receiving presence notifications from the Sip server 70.The notifications are sent when people in the Voice-over-IP contact list come online or offline. A first notification of such presence has been made by a voice-over-IP software equipment of those persons to the SIP server 70 as is know in the case of a PC, for example at power-on of the PC. The list of VOIP contacts may be maintained and stored either in the SIM card or user terminal, or by a module in the SIP server. The Voice-over-IP list of contacts has for example been transmitted to the SIP server by the personal token 10 at power-on of the hosting terminal 20, and the SIP server is able to compare the list of contacts with incoming registering of different users in the network, so as to detect a remote entity which is registering and which is in the list of the SIM card 10. Subscription to SIP includes the fact to disclose such list of possible contacts.

A phonebook management module 13b is coupled to the presence notification module 13a and will update phonebook entries dynamically upon detection of VOIP contacts presence.

A call management module 13c has for purpose to generate upon a call the appropriate Sip signaling which will enable a GSMNOIP gateway 80 to forward the GSM call to the appropriate VOIP user.

The GSM/VOIP Gateway 80 is a server side component in charge of performing the following tasks. It receives the voice call from GSM Handsets to be forwarded to VOIP users, it retrieves the description of the caller and callee id from the Sip server, it forwards the GSM call to the VOIP user.

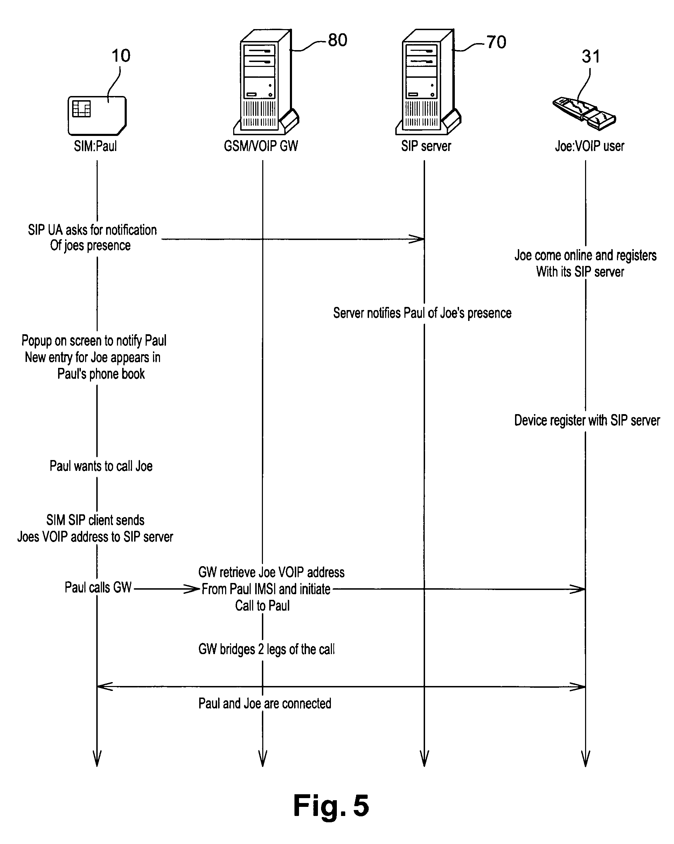

Figure 5 represents a flow of operations occurring in a typical session involving two users : Paul interacting with its handset and Joe interacting with a VOIP softphone running on a PC.

Joes is present in Paul's VOIP contacts. The SIP user agent in Paul's Sim card receives notification of Joe's presence. Whenever a peer in Paul's VOIP address book comes online, a new entry is inserted in Paul's SIM phonebook. The phone number inserted in paul's phonebook corresponds to the number of the GSM/VOIP gateway 80.

The call management module 13c in the SIM card 10 has requested from the handset 20 a notification of an outgoing call (event call control). When Paul selects Joes's entry in his phonebook to place a call, the call management module 13c is invoked and sends a SIP message of type "MESSAGE" to the Sip server 70. The message carries the caller (Paul) IMSI as well as the VOIP address of the callee (Joe's). The call from the handset 20 is placed towards the phone number of the gateway 80.

Upon reception of the call, the gateway 80 retrieves the caller IMSI and sends a request to the Sip server 70 to retrieve the VOIP address of the callee. It then calls the callee and finally bridges the two legs of the call to place Paul in communication with Joe.

## Claims

1. A communicating method between a terminal assembly comprising a terminal and a secure personal token (10, 30, 50) hosted by the terminal in a communication network and a remote entity (11,31,51) in the communication network via a SIP connection, **characterized in that** it comprises the step which consists in interacting with personal data stored in the terminal assembly, which are associated specifically to the end-user and which are subject to being changed during the life duration of the personal token.

2. The communicating method according to claim 1, **characterized in that** the personal data which are interacted with consist in a list of contacts as memorized in the terminal assembly.

3. The communicating method according to claim 2, **characterized in that** the list of contacts is stored in the secure personal token (10, 30, 50).

4. The communicating method according to claim 2 or 3, **characterized in that** the list of contacts is a list of Voice-over-IP contacts in the terminal assembly.

5. The communicating method according to anyone of claims 2 to 4, **characterized in that** the step of interacting with a list of contacts as memorized in the terminal assembly consists in taking account in the terminal assembly when a remote entity (11,31,51) as stored in the list of contacts registers by a SIP server (70) in the network, and have it signaled to the end-user in the terminal assembly after such registration occurs.

6. The communication method according to claim 5, **characterized in that** the terminal assembly takes account of a notification from a SIP server (70) as to registration of a remote entity (11,31,51) which corresponds to a contact of the list, and the terminal assembly proceeds to notification of such registration to the end-user.

7. The communication method according to claim 5 or claim 6, **characterized in that** the terminal assembly stores a list of Voice-over-IP contacts and a distinct list which consists of regular phonebook contacts which are likely to be called by the user, and the step which consists in signaling the availability of the remote entity (11,31,51) to the end-user consists in introducing a contact of the Voice-over-IP list into the phonebook list.

8. The communicating method according to claim 7, **characterized in that** the phonebook list is stored in the secure personal token (10, 30, 50).

9. The communicating method according to claim 7 or claim 8, **characterized in that** the introduction step of a Voice-over-IP contact into the phonebook is performed by an application which is stored and run in the secure personal token (10, 30, 50).

10. The communicating method according to anyone of claims 7 to 9, **characterized in that** the SIM card hosts and runs an application which takes account of an incoming notification which notifies that a SIP enabled entity has registered by a SIP server (70) and the application then performs the introduction step of a Voice-over-IP contact as notified by a SIP server (70) into the phonebook list.

11. The communication method according to claim 2 or claim 3, **characterized in that** the step of interacting with a list of contacts as memorized in the terminal assembly comprises transmission of content of the said list of contacts to the said remote entity (11,31,51) via said SIP connection.

12. The communication method according to claim 11, **characterized in that** the said list of contacts which is interacted with is a phonebook list as stored in the secure personal token (10, 30, 50).

13. The communication method according to claim 11 or claim 12, **characterized in that** the remote entity (11,31,51) is a secure personal token (10, 30, 50).

14. The communication method according to anyone of claims 11 to claim 13, **characterized in that** the remote entity (11,31,51) is a USB key hosted in a remote PC over an IP network.

15. The communication method according to anyone of claims 11 to claim 14, **characterized in that** the remote entity (11,31,51) is a USB key hosted in a home adsl box.

16. The communication method according to anyone of the preceding claims, **characterized in that** it comprises the step which consists in registering the secure personal token by a SIP server (70) as soon as the terminal assembly is powered on.

17. The communication method according to anyone of the preceding claims, **characterized in that** the secure personal token (10, 30, 50) and the remote entity (11,31,51) proceed to mutual authentication.

18. The communicating method according to claim 1, **characterized in that** the personal data which are interacted with consist in at least one authenticating credential for access to a limited access resource which credential(s) is stored in the secure personal token (10, 30, 50).

19. The communicating method according to claim 18, **characterized in that** the step of interacting with credential(s) as memorized in the terminal assembly comprises transmission of said credential(s) to the said remote entity (11,31,51) via said SIP connection.
